# FASCICULE DE BREVET EUROPEEN

(11) **EP 1 017 534 B1**
(45) Date de publication et mention de la délivrance du brevet: **16.10.2002**
(21) Numéro de dépôt: 99931346.3
(22) Date de dépôt: 15.07.1999
(51) Int. Cl.: B23Q 1/01

(54) **MACHINE-OUTIL A STRUCTURE FERMEE ET DISPOSITION ERGONOMIQUE DES PARTIES D'UNE TELLE MACHINE-OUTIL**
WERKZEUGMASCHINE MIT GESCHLOSSENER STRUKTUR UND ERGONOMISCHE AUFSTELLUNG IHRER TEILE
MACHINE-TOOL WITH CLOSED STRUCTURE AND ERGONOMIC ARRANGEMENT OF PARTS OF SAID MACHINE-TOOL

(30) Priorité: 20.07.1998 FR 9809201
(43) Date de publication de la demande: 12.07.2000
(73) Titulaire: Renault Automation Comau, 92365 Meudon La Forêt Cedex (FR)
(72) Inventeur: FIORONI, Claude, F-81100 Castres (FR)
(74) Mandataire: Richebourg, Michel François
(86) Numéro de dépôt international: FR9901721
(87) Numéro de publication internationale: WO00005029

(56) Documents cités:
- EP-A- 0 743 137
- DE-U- 29 801 885
- FR-A- 2 350 151
- FR-A- 2 416 083
- FR-A- 2 698 395
- US-A- 5 394 604

## Description

### DOMAINE D'APPLICATION DE L'INVENTION

La présente invention a trait au domaine de l'usinage et notamment des adaptations de bâtis de machine-outils permettant de réaliser un usinage et notamment du fraisage dans des conditions optimales.

### DESCRIPTION DE L'ART ANTÉRIEUR

Classiquement, la pièce à usiner est placée devant un outil comme par exemple une fraise, tournant à grande vitesse et supportée par un bâti équipé de glissières permettant une translation de l'outil par rapport à la pièce. Cette translation rectiligne définit la trajectoire génératrice d'un plan sur la pièce après passage de l'outil.

Les efforts et les hausses de température générés par le processus de coupe, et notamment lorsque la machine-outil est une machine-outil de grande cadence, engendrent des déformations et notamment des déformations du bâti nécessitant jusqu'à présent l'emploi de composants très massifs.

En effet, le manque de rigidité d'un bâti peut amener un mauvais usinage et doit donc être solutionné notamment lorsque la dimension des composants et la rapidité d'exécution sont telles que les efforts et déformations sont accentués. La nécessité d'obvier aux problèmes précités est d'autant plus importante que la précision requise pour de tels usinages est de plus en plus fine. En conséquence, une première solution a consisté à surdimensionner les bâtis des machine-outils soumises ou susceptibles d'être soumises à de telles déformations afin que ces dernières n'aient aucune influence sur la précision de l'usinage réalisé.

Une autre solution pour éliminer les déformations dues aux efforts de coupe réside dans l'utilisation d'un actionneur assurant un effort sur le bâti de la machine-outil dans le sens contraire des efforts de coupe, effort contraire qui, bien orienté, équilibre le système mécanique.

Une autre solution est divulguée dans le brevet français n° 2 701 881, représentant l'état de la technique le plus proche selon le préambule de la revendication 1, qui, par un dispositif annexe, transforme une machine-outil à structure ouverte en une machine-outil à structure fermée. La machine-outil à structure ouverte est du type de celle comportant un montant vertical qui se déplace le long d'une glissière, le long de l'axe des x, fixée sur une base, ledit montant vertical comportant une traverse en porte-à-faux le long de laquelle se déplace, le long de l'axe Y, un support de broche qui se déplace le long d'un axe orthogonal aux axes précédents, le long de l'axe des Z. Pour obvier aux inconvénients précités, ladite machine-outil comporte une structure additionnelle conçue pour être située au niveau de son côté ouvert, munie d'un dispositif de raccordement qui coulisse le long de ladite structure, ledit dispositif de raccordement étant conçu pour être relié à l'extrémité libre de ladite traverse de manière à constituer une machine à portique avec un bâti à structure fermée. Le fait de fermer la structure du bâti permet de soulager toute la structure mais également de paramétrer les contraintes appliquées audit bâti afin de calculer et de dimensionner de façon optimale les composants du bâti.

Le passage d'une structure ouverte à une structure fermée permet donc de supprimer les efforts et déformations dus aux opérations d'usinage.

L'inconvénient au dispositif décrit par le susdit brevet réside dans le fait que la structure permettant de fermer le bâti et ainsi d'équilibrer le dispositif mécanique constitué par le bâti, n'est qu'additionnelle. En effet, pour des raisons d'accessibilité, la structure additionnelle est escamotable et ne ferme pas la structure du bâti en permanence.

### DESCRIPTION DE L'INVENTION

Partant de cet état de fait, la demanderesse a mené des recherches sur un nouveau concept de disposition de machine-outil notamment de machine-outil de fraisage assurant les fonctions normales d'une machine-outil à grande cadence d'usinage tout en obviant aux inconvénients précités et en proposant un bâti à structure fermée.

Ces recherches ont abouti à la conception originale d'une machine-outil adoptant une disposition originale de ses composants.

Selon la caractéristique principale de l'invention, la machine-outil d'usinage du type de celle adoptant un bâti à structure fermée, la zone d'usinage étant délimitée par les surfaces internes du bâti et comprenant une tête d'usinage assurant le support du moyen d'entraînement d'un outil d'usinage, est remarquable en ce que le bâti de ladite machine-outil adopte un profil en C, les extrémités des branches dudit C étant reliées par la tête d'usinage de la machine-outil.

Cette caractéristique est particulièrement avantageuse en ce qu'elle permet d'une part, de respecter la nécessité de supprimer les déformations dues aux efforts de coupe en proposant un bâti en structure fermée et d'autre part, en réalisant la fermeture de cette structure indéfiniment et au moyen de la tête d'usinage de la machine-outil.

En outre, le fait d'utiliser la disposition de la tête d'usinage à l'intérieur du C dessiné par le bâti qui la supporte, a pour avantage de diminuer le volume de la zone d'usinage et donc de confiner ou de limiter les zones soumises à la projection des copeaux, aux jets de liquides et à une atmosphère viciée. Aussi, cette limitation de la zone d'usinage autorise une évacuation facilitée des effluents précités ainsi qu'une cartérisation améliorée.

La disposition du bâti adoptant la forme d'un C fermé par la tête d'usinage de la machine-outil a en outre pour avantage de proposer une machine-outil dédiée à une cadence de fabrication poussée qui, géométriquement, forme un tunnel de passage des pièces à usiner.

Selon une autre caractéristique particulièrement avantageuse de l'invention, la machine-outil est du type de celle dont la tête d'usinage est mobile et est remarquable en ce que chaque extrémité des branches du C du profil du bâti supporte une glissière assumant le support et le guidage de ladite tête d'usinage dans ses mouvements d'usinage.

Ainsi, non seulement la machine-outil de l'invention ferme un bâti en C au moyen de sa tête d'usinage mais elle propose également d'utiliser judicieusement les extrémités du C formé par le bâti pour supporter des glissières qui assumeront le guidage de la tête d'usinage lors de ses déplacements.

Dans l'esprit de la demanderesse, la structure de la machine-outil de l'invention telle que précédemment décrite et suivant les avantages qu'elle apporte, est particulièrement adaptée lorsque l'usinage réalisé par ladite tête d'usinage est du fraisage.

Les concepts fondamentaux de l'invention venant d'être exposés ci-dessus dans leur forme la plus élémentaire, d'autres détails et caractéristiques ressortiront plus clairement à la lecture de la description qui suit, donnant à titre d'exemple non limitatif et en regard des dessins annexés, un mode de réalisation d'une machine-outil conforme à l'invention.

### BRÈVE DESCRIPTION DES DESSINS

La figure 1 est une vue schématique d'ensemble en perspective éclatée avant de la machine-outil de l'invention,
La figure 2 est une vue schématique d'ensemble en perspective arrière de la machine-outil de la figure 1,
La figure 3 est une vue schématique de détail en perspective d'un dispositif de manutention particulièrement adapté à la machine-outil de l'invention,
La figure 4 est une vue schématique d'ensemble en perspective illustrant la disposition originale des parties fonctionnelles d'une machine-outil conforme à l'invention.

### DESCRIPTION DES MODES DE RÉALISATION PRÉFÉRÉS

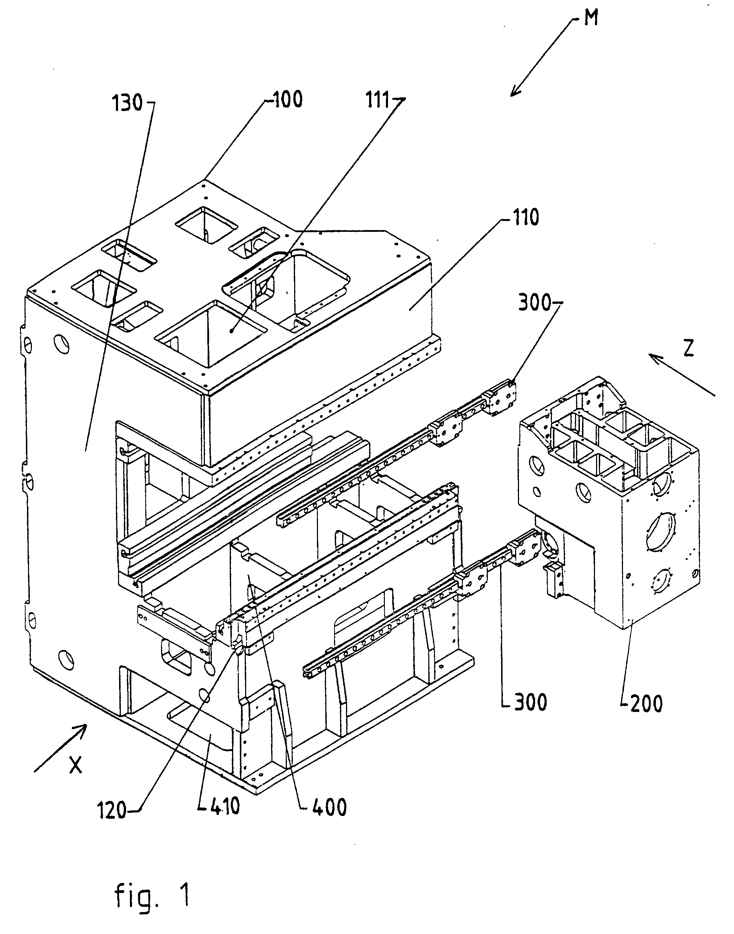

Telle qu'illustrée sur le dessin de la figure 1, la machine-outil référencée dans son ensemble M est du type de celle adoptant un bâti 100 à structure fermée, la zone d'usinage étant délimitée par les surfaces internes du bâti 100 et comprenant une tête d'usinage 200 assurant le support du moyen d'entraînement d'un outil d'usinage. Selon la caractéristique principale de l'invention, le bâti 100 de ladite machine-outil M adopte un profil en C, les extrémités 110 et 120 dudit C étant reliées par la tête d'usinage 200 de la machine-outil M.

Ainsi, la géométrie de la machine-outil M définit un tunnel de passage des pièces à usiner selon un axe de transfert symbolisé par la flèche X. L'outil non représenté assure classiquement une translation perpendiculairement à l'axe de transfert à l'intérieur dudit tunnel selon l'axe Z. Ce tunnel de passage des pièces définissant un axe de transfert de ces dernières est particulièrement adapté à l'usinage à grande cadence.

La machine-outil M telle qu'illustrée est également du type de celle dont la tête d'usinage 200 est mobile. En conséquence, en dehors du mouvement perpendiculaire à l'axe de transfert des pièces réalisé par l'outil, la tête d'usinage 200 de la machine-outil M assure un mouvement parallèle à l'axe de transfert. A cette fin et selon une caractéristique particulièrement avantageuse de l'invention, chaque extrémité des branches 110 et 120 du C formé par le profil du bâti 100, est équipée d'une glissière 300 assumant le support et le guidage de ladite tête d'usinage 200 dans ses mouvements d'usinage. L'ouverture du C constitué par le bâti 100 est donc fermée par l'intermédiaire de glissières de guidage par la tête d'usinage 200.

De par cette disposition particulièrement judicieuse, la machine-outil de l'invention remplit deux fonctions, à savoir :
- la fermeture du système mécanique défini par le bâti 100 au moyen de la tête d'usinage afin de supprimer les contraintes mécaniques et leurs conséquences sur ledit bâti 100,
- le guidage de ladite tête d'usinage selon un mouvement dont la direction est parallèle à l'axe de transfert X, mouvement nécessaire à l'usinage de la pièce, en utilisant la géométrie particulière du bâti 100 pour disposer les moyens de guidage.

Selon un mode préféré mais non limitatif d'application de ladite machine-outil M telle que conçue, l'usinage réalisé par ladite tête d'usinage est du fraisage. Bien qu'applicable en théorie à tout type d'usinage, la structure fermée de la machine-outil M de l'invention et l'utilisation de cette géométrie afin de situer les guidages de la tête d'usinage permettant le mouvement de cette dernière ainsi que son accessibilité trouve une application particulièrement bien adaptée à l'usinage du type fraisage dont les composants et les cadences de réalisation requis, nécessitent une structure de bâti très rigide.

Le bâti 100 en forme de C avec, disposée aux extrémités 110 et 120 de ce C, une tête d'usinage 200 mobile selon l'axe de transfert X, a en effet pour autre avantage d'apporter une très grande accessibilité à l'arrière de la tête d'usinage 200.

Bien entendu, les avantages susmentionnés s'associent à ceux déjà connus d'une structure fermée dont celui qui consiste à usiner dans un espace quasi-fermé délimitant précisément la zone d'usinage de l'outil entraîné par la tête d'usinage 200.

Comme illustrées, les glissières 300 situées aux extrémités 110 et 120, sont identiques et orientées de la même façon. Toutes les deux proposent à la tête d'usinage 200 un appui perpendiculaire à l'axe de transfert des pièces tout en permettant la fermeture du système mécanique constitué par la tête d'usinage 200 et le bâti 100 en forme de C.

Selon le mode préféré mais non limitatif de réalisation, ce sont les surfaces verticales constituant les extrémités des branches 110 et 120 du C formé par le bâti 100 de la machine-outil M, qui supportent la partie fixe des glissières 300 de guidage du mouvement selon l'axe X de la tête d'usinage 200. Aussi, cette dernière est accolée au bâti 100 en forme de C mais n'est pas disposée entre les deux branches 110 et 120 du bâti 100 mais ferme la zone d'usinage en s'interposant entre les extrémités des deux branches du bâti 100.

Selon un mode de réalisation particulièrement avantageux, l'axe de rotation de l'outil de la tête d'usinage 200 usinant à l'intérieur du C est parallèle aux branches du C formé par le bâti 100. Cette disposition particulière a pour avantage d'équilibrer la structure de la machine-outil tout en proposant une simplification du bâti de la machine-outil M.

Selon le mode préféré mais non limitatif de réalisation illustré, le bâti 100 comporte parallèlement à l'axe X de transfert des pièces et dans la zone d'usinage délimitée par les branches 110 et 120 du C, deux paires de rainures adoptant un profil en T et ouvertes sur la zone d'usinage. Une première paire est solidaire de la branche inférieure 120 du bâti 100 et disposée de façon à ce que la barre horizontale du T soit parallèle aux branches du C. La deuxième paire est solidaire de la partie centrale 130 verticale du C et disposée de façon à ce que la barre horizontale du T soit perpendiculaire aux branches du C. Ces rainures ont pour fonction de proposer plusieurs possibilités de fixation de montage porte-pièce à usiner. Ainsi, la forme particulière du bâti 100 permet le support de deux paires de rainures. De plus, un dispositif de bridage intégré à la branche supérieure 110 du bâti 100 pour des raisons d'encombrement pourra fonctionner en adéquation avec la première paire de rainures en T afin de proposer un serrage de la pièce du type bridage en toit. La forme particulière du bâti 100 permet donc de proposer plusieurs types de bridage.

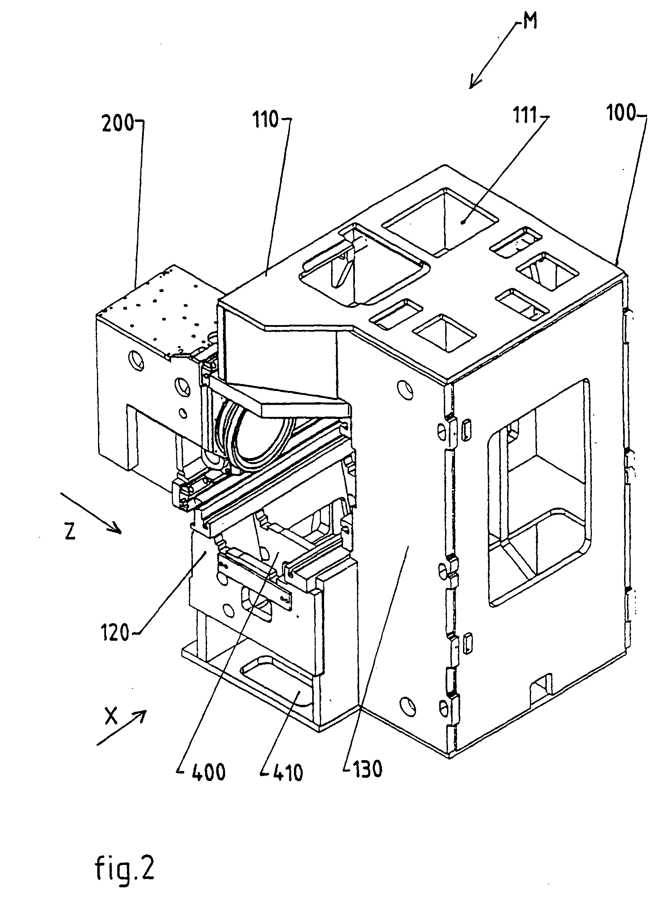

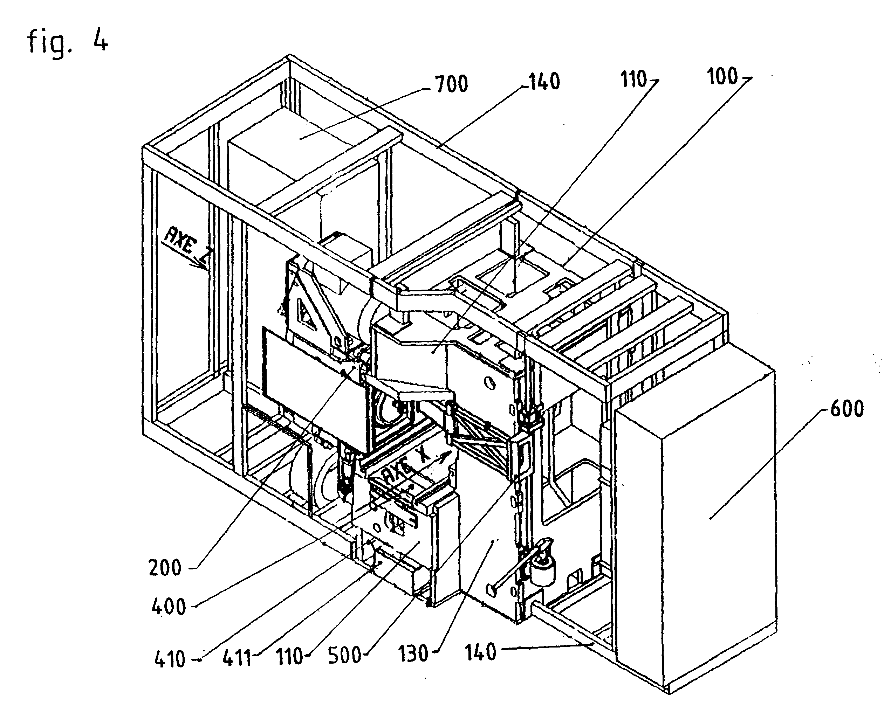

En outre, la branche inférieure 120 du bâti 100 en forme de C est préformée de façon à recevoir un dispositif de récupération de copeaux 400 tel un bac, un tapis roulant ou encore un dispositif à paroi vibrante. La disposition en C permet en effet de concevoir une zone d'usinage comportant un maximum de parois verticales, parois permettant d'orienter les copeaux vers leur zone de récupération 400. Aussi, comme illustrée sur les dessins des figures 1 et 2, la branche inférieure 120 est aménagée dans sa partie basse d'un passage 410 communiquant avec la zone de récupération de copeaux 400 lequel passage peut accueillir un bac 411 comme illustré sur le dessin de la figure 4 ou un convoyeur de copeaux.

Toujours pour exploiter au maximum les avantages de la géométrie d'un bâti 100 en forme de C, la branche supérieure 110 est munie d'un dispositif d'aspiration des fumées. La géométrie particulière de cette machine-outil M permet donc un contrôle optimal des effluents à savoir les copeaux et les fumées résultant des opérations d'usinage. Comme illustrée sur le dessin des figures 1 et 2, l'ouverture référencée 111 aménagée dans ladite branche supérieure 110 et communiquant avec la zone d'usinage délimitée par les branches 110 et 120 du C formé par le bâti 100, est prévue à cet effet.

Pour parachever la délimitation de la zone d'usinage et notamment de la zone d'usinage d'une machine-outil M telle qu'illustrée et dédiée à des opérations de fraisage, le mouvement de la tête d'usinage étant limité à un axe défini, un rideau vertical mobile de protection, non illustré, contre la projection des copeaux a une hauteur égale à l'écartement séparant les deux branches du C formé par le bâti et suit les mouvements rectilignes de la tête d'usinage 200.

La géométrie particulière du bâti 100 et le nombre de mouvements limités par l'application permettent d'intégrer une paroi verticale de protection assurant une séparation étanche à cet endroit de la machine-outil M.

Cette machine-outil M a également pour particularité un accès à l'outil ou à la broche porte-outil difficile en raison même de la géométrie de son bâti 100 ayant pour avantage et inconvénient, la délimitation de la zone d'usinage. En effet, l'opération d'usinage étant réalisée à l'intérieur du C formé par le bâti 100, il est particulièrement difficile d'avoir accès à l'outil ou à la broche pour leur changement. Bien que ce dernier n'intervienne pas à grande fréquence, il est nécessaire que la broche, l'outil et/ou la pièce puissent être manutentionnés. La difficulté est d'autant plus importante que la broche ou l'outil d'une machine-outil de fraisage assurant un usinage à grande cadence de production est de grande dimension et donc d'un poids particulièrement important.

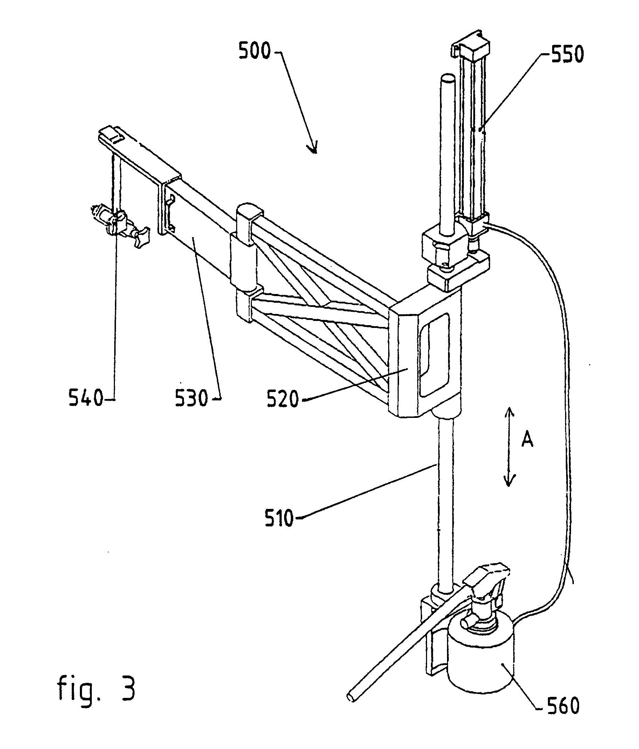

Pour y répondre, la demanderesse a judicieusement conçu un dispositif de manutention 500 particulièrement adapté à la géométrie de la machine-outil M de l'invention, mais pouvant s'adapter à d'autres types de machine-outil. A cet effet, comme illustrée par les figures 3 et 4, la partie arrière verticale 130 du C formé par le bâti 100 venant en vis-à-vis de l'outil est équipée d'un dispositif articulé 500 s'introduisant entre les branches 110 et 120 du C, de façon à assumer les opérations de manutention de l'outil et/ou de la pièce permettant soit l'extraction de l'outil ou de la broche d'entraînement de l'outil de la tête d'usinage 200, soit la manutention de la pièce usinée ou à usiner.

Tel qu'illustré sur le dessin de la figure 3, ce dispositif articulé de manutention 500 se compose d'une colonne de guidage verticale 510 solidaire du bâti 100 sur laquelle se déplace de manière articulée une potence 520 munie à son extrémité libre d'un bras articulé 530 lequel dispose d'un sous-ensemble de manutention 540, la montée et/ou la descente selon la double flèche A de la potence 520 le long de la colonne de guidage 510 étant commandées par l'action d'un vérin 550 dont l'entrée et la sortie de tige sont soumises à l'action manuelle d'un opérateur sur un générateur d'énergie. Comme illustré à titre d'exemple, le générateur d'énergie est ici constitué par une pompe hydraulique manuelle 560 alimentant le vérin 550. L'adoption d'un dispositif manuel actionnable par l'opérateur est particulièrement adapté à l'application en ce que les opérations de manutention sont rares et ponctuelles. Un dispositif manuel indépendant a en outre pour avantage d'être toujours opérationnel lors de l'arrêt, pour quelles raisons que ce soient de la machine-outil.

Les différentes articulations entre la colonne 510, la potence 520 et le bras 530 sont aménagées de façon à ce que le dispositif 500 dans son ensemble puisse passer d'une position repliée d'attente ou déployée de manutention à l'arrière du bâti 100 de la machine-outil M à une position déployée d'extraction ou de dépose à l'intérieur de la zone d'usinage de ladite machine-outil M.

La figure 4 illustre la situation dudit dispositif de manutention 500 par rapport au bâti 100 et notamment dans une position déployée à l'intérieur de la zone d'usinage délimitée par les surfaces intérieures du C formé par le bâti 100 de la machine-outil M.

La structure fermée de ladite machine-outil M avec sa caractéristique qui consiste à fermer son bâti 100 en forme de C au moyen de sa propre tête d'usinage 200 montée mobile, permet d'envisager une disposition ergonomique des parties fonctionnelles de la machine-outil M. Ainsi, selon un mode de réalisation particulièrement avantageuse de l'invention, illustré sur le dessin de la figure 4, la demanderesse a imaginé une disposition ergonomique des parties fonctionnelles d'une machine-outil d'usinage M à structure fermée du type de celle comportant un bâti 100 adoptant un profil en C, les extrémités 110 et 120 dudit C étant liées au moyen de la tête d'usinage 200 de la machine-outil M, ladite tête d'usinage 200 étant mobile, chaque extrémité des branches du C du profil du bâti 100 étant équipée d'une glissière 300 assumant le support et le guidage de ladite tête d'usinage 200 dans ses mouvements d'usinage, ladite machine-outil M comportant entre autres les éléments classiques telles que les armoires électriques 600 et le groupe de régulation 700 et définissant une zone arrière comprenant la partie verticale 130 du C formé par le bâti 100 et une zone avant comprenant la tête d'usinage 200. Cette disposition est remarquable en ce que la zone arrière de la machine-outil comporte les armoires électriques 600 solidaires du bâti 100 au moyen d'un châssis tubulaire 140 et disposées de façon à laisser un volume libre entre elles et la partie verticale 130 du C formé par le bâti 100, volume libre accueillant le dispositif de manutention articulé 500 dans sa position d'attente ou déployée de manutention. Cette disposition est également remarquable en ce que la zone avant de la machine-outil M comporte le groupe de régulation 700 qui, solidaire du bâti 100 au moyen dudit susdit châssis tubulaire 140, est disposé de façon à laisser libre accès à l'arrière de la tête d'usinage 200, la seule ouverture fonctionnelle traversante étant constituée par la zone d'usinage définissant l'axe de transfert X des pièces à usiner.

Selon un mode non illustré de réalisation, la susdite zone avant est enveloppée d'une enceinte rigide assurant la fonction de boîtier de protection autour de la tête d'usinage 200 et du groupe de régulation.

On comprend que la machine-outil d'usinage et la disposition ergonomique des parties fonctionnelles d'une telle machine-outil qui viennent d'être ci-dessus décrits et représentés, l'ont été en vue d'une divulgation plutôt que d'une limitation.

## Revendications

1. Machine-outil d'usinage (M) du type de celle adoptant un bâti (100) à structure fermée, la zone d'usinage étant délimitée par les surfaces internes du bâti (100) et comprenant une tête d'usinage (200) assurant le support du moyen d'entraînement d'un outil d'usinage, **CARACTÉRISÉE PAR LE FAIT QUE** le bâti (100) de ladite machine-outil (M) adopte un profil en C, les extrémités des branches (110 et 120) dudit C étant reliées par la tête d'usinage (200) de la machine-outil (M).

2. Machine-outil (M) selon la revendication 1 du type de celle dont la tête d'usinage (200) est mobile, **CARACTÉRISÉE PAR LE FAIT QUE** chaque extrémité des branches (110 et 120) du C du profil du bâti (100) supporte une glissière (300) assumant le support et le guidage de ladite tête d'usinage (200) dans ses mouvements d'usinage.

3. Machine-outil (M) selon la revendication 1, **CARACTÉRISÉE PAR LE FAIT QUE** l'axe de rotation de l'outil de la tête d'usinage (200) usinant à l'intérieur du C est parallèle aux branches (110 et 120) du C formé par le bâti.

4. Machine-outil (M) selon la revendication 1, **CARACTÉRISÉE PAR LE FAIT QUE** la branche inférieure (120) du C est préformée de façon à recevoir un dispositif de récupération de copeaux (400).

5. Machine-outil (M) selon la revendication 1, **CARACTÉRISÉE PAR LE FAIT QUE** la branche supérieure (110) du C est préformée de façon à recevoir un dispositif de récupération des fumées.

6. Machine-outil (M) selon l'une quelconque des revendications 1 à 5, **CARACTÉRISÉE PAR LE FAIT QUE** l'opération d'usinage réalisée par ladite tête d'usinage (200) est du fraisage.

7. Machine-outil (M) selon l'une quelconque des revendications 1 à 6, du type de celle dont le mouvement de la tête d'usinage (200) est limité à un axe défini, **CARACTÉRISÉE PAR LE FAIT QU'**un rideau vertical mobile de protection contre la projection des copeaux comporte une hauteur égale à l'écartement séparant les deux branches (110 et 120) du C formé par le bâti (100) et suit les mouvements rectilignes de la tête d'usinage (200).

8. Machine-outil (M) selon les revendications 1 à 7 prises ensemble, **CARACTÉRISÉE PAR LE FAIT QUE** la partie arrière verticale (130) du C formé par le bâti (100) venant en vis-à-vis de l'outil est équipée d'un dispositif de manutention articulé (500) s'introduisant entre les branches (110 et 120) du C, de façon à assumer les opérations de manutention de l'outil et/ou de la pièce.

9. Machine-outil (M) selon la revendication 8, **CARACTÉRISÉE PAR LE FAIT QUE** ledit dispositif de manutention articulé (500) se compose d'une colonne de guidage verticale (510) solidaire du bâti (100) sur laquelle se déplace de manière articulée une potence (520) munie à son extrémité libre d'un bras articulé (530) lequel dispose d'un sous-ensemble de manutention (540), la montée et la descente (double flèche A) de la potence (520) le long de la colonne de guidage (510) étant commandées par l'action d'un vérin (550) dont l'entrée et la sortie de tige sont soumises à l'action manuelle d'un opérateur sur un générateur d'énergie (560), les articulations entre la colonne (510), la potence (520) et le bras (530) étant disposées de façon à ce que le dispositif (500) dans son ensemble puisse passer d'une position repliée d'attente ou déployée de manutention à l'arrière du bâti (100) de la machine-outil (M) à une position déployée d'extraction ou de dépose à l'intérieur de la zone d'usinage de ladite machine-outil (M).

10. Disposition ergonomique des parties fonctionnelles d'une machine-outil (M) d'usinage à structure fermée du type de celle comportant un bâti (100) adoptant un profil en C, les extrémités (110 et 120) dudit C étant reliées par la tête d'usinage (200) de la machine-outil (M), ladite tête d'usinage (200) étant mobile, chaque extrémité des branches (110 et 120) du C du profil du bâti (100) étant équipée d'une glissière (300) assumant le support et le guidage de ladite tête d'usinage (200) dans ses mouvements d'usinage, ladite machine-outil (M) comportant entre autres, les éléments classiques tels qu'armoires électriques (600) et groupe de régulation (700) et définissant une zone arrière comprenant la partie verticale (130) du C formé par le bâti (100) et une zone avant comprenant la tête d'usinage (200), **CARACTÉRISÉE PAR LE FAIT QUE** la zone arrière de la machine-outil (M) comporte les armoires électriques (600) qui, solidaires du bâti (100) au moyen d'un châssis tubulaire (140), sont disposées de façon à laisser un volume libre entre elles et la partie verticale (130) du C formé par le bâti (100), volume libre accueillant un dispositif de manutention articulé (500) dans sa position d'attente ou déployée de manutention, **ET PAR LE FAIT QUE** la zone avant de la machine-outil (M) comporte le groupe de régulation (700) qui, solidaire du bâti (100) au moyen dudit susdit châssis tubulaire (140), est disposé de façon à laisser libre accès à l'arrière de la tête d'usinage (200), la seule ouverture fonctionnelle traversante étant constituée par la zone d'usinage.

## Patentansprüche

1. Bearbeitungswerkzeugmaschine (M) mit geschlossenem Gestellrahmen (100), wobei der Bearbeitungsbereich von den Innenflächen des Rahmens (100) begrenzt wird und einen zur Halterung und Führung des Antriebsmittels eines Bearbeitungswerkzeugs dienenden Bearbeitungskopf (200) einschließt, **DADURCH GEKENNZEICHNET, DASS** ihr Rahmengestell (100) als ein C-Profil gestaltet wird, wobei die Enden der Ausläufer (100 und 120) des C-Profils durch den Bearbeitungskopf (200) der Werkzeugmaschine (M) verbunden sind.

2. Werkzeugmaschine (M) nach Anspruch 1 mit beweglichem Bearbeitungskopf (200), **DADURCH GEKENNZEICHNET, DASS** jedes Ende der Profil-Ausläufer (110 und 120) des Rahmenprofils (100) eine Laufschiene (300) trägt, die zur Halterung und Führung des Bearbeitungskopfs während derer Bearbeitungsgänge (200) dient.

3. Werkzeugmaschine (M) nach Anspruch 1, **DADURCH GEKENNZEICHNET, DASS** die Werkzeugdrehachse des innerhalb des C-Profils arbeitenden Bearbeitungskopfs (200) parallel zu den Ausläufern (110 und 120) des durch den Rahmen gebildeten C-Profils verläuft.

4. Werkzeugmaschine (M) nach Anspruch 1, **DADURCH GEKENNZEICHNET, DASS** der untere Ausläufer (120) des C-Profils derart gebildet ist, daß er eine Spänenauffangvorrichtung (400) aufnehmen kann.

5. Werkzeugmaschine (M) nach Anspruch 1, **DADURCH GEKENNZEICHNET, DASS** der obere Ausläufer (110) des C-Profils derart gebildet ist, daß er eine Rauchauffangvorrichtung aufnehmen kann.

6. Werkzeugmaschine (M) nach einem der Ansprüchen 1 bis 5, **DADURCH GEKENNZEICHNET, DASS** die vom Bearbeitungskopf (200) vorgenommene Bearbeitung ein Fräsverfahren ist.

7. Werkzeugmaschine (M) nach einem der Ansprüchen 1 bis 6, bei der die Bewegung des Bearbeitungskopfs (200) auf eine Achse beschränkt ist, **DADURCH GEKENNZEICHNET, DASS** ein senkrechter, beweglicher Spänenschutzvorhang eine gleiche Höhe beträgt wie der Abstand zwischen den beiden Ausläufern (110 und 120) des durch den Rahmen (100) gebildeten C-Profils und während der geraden Bewegungen des Bearbeitungskopfes (200) mitläuft.

8. Werkzeugmaschine (M) nach den Ansprüchen 1 bis 7, **DADURCH GEKENNZEICHNET, DASS** der senkrechte, gegenüber dem Werkzeug stehende hintere Bereich (130) des durch den Rahmen (100) gebildeten C-Profils mit einer beweglichen Handlingsvorrichtung (500) versehen ist, die zwischen den Ausläufern (110 und 120) des C-Profils eingeführt wird, um die Handlingsarbeit des Werkzeugs und/oder des Werkstücks zu übernehmen.

9. Werkzeugmaschine (M) nach Anspruch 8, **DADURCH GEKENNZEICHNET, DASS** die bewegliche Handlingsvorrichtung (500) aus einer mit dem Rahmen (100) verbundenen Führungssäule (510) besteht, an der ein Trägersystem (520) beweglich angelenkt verbunden ist, an dessen Ende sich ein Gelenkarm (530) mit einem Handlingsmodul (540) befindet, wobei die Auf- und Abfahrt (Doppelpfeil A) des Trägersystems (520) entlang der Führungssäule (510) durch eine Kolben-Zylindereinheit (550) gesteuert wird, deren Stifteingang bzw. -ausgang durch einen Bediener mittels eines Stromgenerators (560) betätigt wird, und wobei die Bewegungsverbindungen zwischen der Säule (510), dem Trägersystem (520) und dem Arm (530) so ausgeführt sind, daß die Handlingsvorrichtung (500) im Ganzen von einer eingefahrenen Wartestellung bzw. einer gestreckten Handlingsstellung im hinteren Bereich des Gestellrahmens (100) der Werkzeugmaschine (M) in eine gestreckte Greifoder Ablagestellung innerhalb des Bearbeitungsbereichs der Werkzeugmaschine (M) übergehen kann.

10. Ergonomische Anordnung der Funktionsteile einer Bearbeitungswerkzeugmaschine (M) mit einem geschlossenem, als ein C-Profil gestalteten Gestellrahmen (100), bei der die Auslaufenden (110 und 120) des Profils durch den Bearbeitungskopf (200) der Werkzeugmaschine (M) verbunden sind, wobei der Bearbeitungskopf (200) beweglich ist, jedes Ende der Profil-Ausläufer (110 und 120) des Rahmenprofils (100) eine Laufschiene (300) trägt, die zur Halterung und Führung des Bearbeitungskopfs (200) während derer Bearbeitungsgänge dient, wobei die Werkzeugmaschine (M) unter anderem Standardelemente wie Schaltschränke (600) und Regeleinheit (700) umfaßt und mit dem senkrechten Teil (130) des vom Rahmen (100) gebildeten C-Profils einen hinteren Bereich und mit dem Bearbeitungskopf (200) einen vorderen Bereich definiert, **DADURCH GEKENNZEICHNET, DASS** der hintere Bereich der Werkzeugmaschine (M) die Schaltschränke (600) umfaßt, welche durch einen Rohrrahmen (140) mit dem Gestell (100) verbunden und so montiert sind, daß sie einen Freiraum zwischen sich selbst und dem senkrechten Teil (130) des durch den Rahmen (100) gebildeten C-Profils lassen, wobei dieser Freiraum eine bewegliche Handlingsvorrichtung in ihrer Warte- bzw. gestreckten Greifstellung umschließt, UND DADURCH, DASS der vordere Bereich der Werkzeugmaschine (M) die Regeleinheit (700) umfaßt, welche durch den vorgenannten Rohrrahmen (140) mit dem Gestell (100) verbunden und so montiert ist, daß sie hinter dem Bearbeitungskopf (200) einen freien Zugang läßt, da die einzige durchgehende funktionelle Öffnung durch den Bearbeitungsbereich gebildet wird.

## Claims

1. Machining machine-tool (M) of the type of which having a fixed frame (100), the machining zone being defined by the internal surfaces of the frame (100) and comprising an operating head (200) ensuring the support of the driving means of a machining tool **WHEREIN** the frame (100) of the said machine tool (M) adopts a C-shaped profile, the ends of the branches (110 and 120) of the said C being linked by the operating head (200) of the machine tool (M).

2. Machining machine-tool (M) according to claim 1 of the type of which the operating head (200) is mobile **WHEREIN** each end of the branches (110 and 120) of the C-shaped profile of the frame (100) holds a slide block (300) having for 'function to support and guide the said operating head (200) in its machining movements.

3. Machining machine-tool (M) according to claim 1 **WHEREIN** the rotation axis of the tool of the operating head (200) machining inside the C is parallel with the branches (110 and 120) of the C shaped by the frame.

4. Machining machine-tool (M) according to claim 1 **WHEREIN** the lower branch (120) of the C is pre-shaped so as to receive a swarf collecting device (400).

5. Machining machine-tool (N) according to claim 1 **WHEREIN** the upper branch (110) of the C is pre-shaped so as to receive a smoke suction device.

6. Machining machine-tool (M) according to any of the claims 1 to 5, **WHEREIN** the machining operation realised by the said operating head (200) is milling.

7. Machining machine-tool (M) according to any of the claims 1 to 6, of the type of which the movement of the operating head (200) is limited to a defined axis, **WHEREIN** a mobile vertical protection shield, against the projection of swarf has a height equal to the separation between the two branches (110 and 120) of the C shaped by the frame (100) and follows the rectilinear movements of the operating head (200).

8. Machining machine-tool (M) according to claims 1 to 7 taken together, **WHEREIN** the rear vertical part (130) of the C shaped by the frame (100) coming opposite the tool is fitted with an articulated handling device (500) coming between the branches (110 and 120) of the C, so as to ensure the handling operations of the tool and/or the workpiece.

9. Machining machine-tool (M) according to claim 8, **WHEREIN** the said articulated handling device (500) comprises a vertical guide column (510) integral with the frame (100) on which moves in an articulated manner a bracket (520) fitted at its free end with an articulated arm (530) which arm comprises a handling subset (540), the ascension or lowering' (double arrow A) of the bracket (520) along the guiding column (510) being controlled by the action of a jack (550) of which the rod comes in and out by the manual action of a handler on a generator (560), the articulations between column (510), bracket (520) and arm (530) being arranged so that the device (500) as a whole can go from a folded or an extended waiting position at the rear of the frame (100) of the machine tool (M) to an extended position for removing or retrieving inside the machining zone of the said machine tool (M).

10. Ergonomic arrangement of the functional parts of a machining machine-tool (M) with closed structure of the type of which comprising a frame (100) adopting a C-shaped profile, the ends (110 and 120) of the said C being linked by the operating head (200) of the machine tool (M), the said operating head (200) being mobile, each end of the branches (110 and 120) of the C-shaped profile of the frame (100) being fitted with a slide block (300) having for function to support and guide the said operating head (200) in its machining movements, said machine tool (M) comprising amongst others, the classical components such as electric cupboards (600) and regulation group (700) and defining a rear zone comprising the vertical part (130) of the C shaped by the frame (100) and a front zone comprising the operating head (200) **WHEREIN** the rear zone of the machine tool (M) comprises the electric cupboards (600) which, integral with the frame (100) by means of a tubular frame (140) are arranged so as to leave a free space between them and the vertical part (130) of the C shaped by the frame (100), which free space receives an articulated handling device (500) in its waiting position or extended position for handling, and **WHEREIN** the front zone of the machine tool (M) comprises the regulation group (700) which, integral with the frame (100) by means of the said aforementioned tubular frame (140), is arranged so as to leave 'free access at the rear of the operating head (200), the only functional opening passing through being constituted by the machining zone.
